Europäisches Patentamt

European Patent Office

Office européen des brevets

(19)

(11) Veröffentlichungsnummer: **0 173 823**
**B1**

(12) **EUROPÄISCHE PATENTSCHRIFT**

(45) Veröffentlichungstag der Patentschrift: **11.04.90**

(21) Anmeldenummer: **85108555.5**

(22) Anmeldetag: **10.07.85**

(51) Int. Cl.⁵: **G 05 D 9/12, B 67 D 1/00**

(54) **Schaltungsanordnung zum geregelten Auffüllen und Nachfüllen von Behältern mit Flüssigkeiten.**

(30) Priorität: **22.08.84 DE 3430907**

(43) Veröffentlichungstag der Anmeldung:
**12.03.86 Patentblatt 86/11**

(45) Bekanntmachung des Hinweises auf die
Patenterteilung:
**11.04.90 Patentblatt 90/15**

(84) Benannte Vertragsstaaten:
**AT BE CH DE FR GB IT LI LU NL SE**

(56) Entgegenhaltungen:
EP-A-0 028 067      DE-B-2 818 286
EP-A-0 080 253      GB-A-2 154 986
DE-A-3 038 045      US-A-4 194 650

PATENT ABSTRACTS OF JAPAN, Band 3, Nr.
126 (M-77), 20. Oktober 1979, Seite 50 M 77; &
JP - A - 54 102 480
PATENT ABSTRACTS OF JAPAN, Band 8, Nr.
245 (P-312)1682r, 10. November 1984; & JP - A -
59 119 404

(73) Patentinhaber: **Bosch-Siemens Hausgeräte
GmbH
Hochstrasse 17
D-8000 München 80 (DE)**
(73) Patentinhaber: **Coca-Cola Company
P.O.Drawer 1734
Atlanta Georgia 30301 (US)**

(72) Erfinder: **Aschberger, Matthias, Dipl.-Ing.
Am Läutenberg 9/1
D-7928 Giengen (DE)**
Erfinder: **Färber, Karlheinz, Dipl.-Ing.
Giegerweg 1
D-7928 Giengen (DE)**
Erfinder: **Deininger, Anton, Dipl.-Ing.
Vogtstrasse 20
D-8887 Bachhagel (DE)**

(74) Vertreter: **Rode, Franz et al
BOSCH-SIEMENS HAUSGERÄTE GMBH Patent-
und Vertragswesen Hochstrasse 17
D-8000 München 80 (DE)**

Courier Press, Leamington Spa, England.

**Beschreibung**

Die vorliegende Erfindung bezieht sich auf eine Schaltungsanordnung zum geregelten Auffüllen und Nachfüllen von Behältern mit Flüssigkeiten unter Verwendung einer elektrisch beeinflußbaren Zulauf-Steuereinrichtung zur phasenweisen Durchführung des Flüssigkeitszulaufs, insbesondere für Getränke-Mischgeräte, mit einem Wasseraufbereitungsbehälter, welchem das aufzubereitende Wasser über eine Förderpumpe in Abhängigkeit eines von zwei über eine Wasserstands-Sensoranordnung aus dem Wasserstand ermittelten Wasserbedarfssignalen zuführbar ist.

Es ist beispielsweise bekannt, Mischgetränke unmittelbar vor dem Verbrauch durch Mischung aus Getränkekonzentraten mit karbonisiertem Wasser herzustellen. Zur Bereitung dieses karbonisierten Wassers kann in bekannter Weise ein Vorratsbehälter Verwendung finden, welcher bevorzugterweise gekühlt wird. Diesem Vorratsbehälter sind karbonisierte Wassermengen bedarfsweise zu entnehmen. Entsprechend müssen diesem Behälter die Bestandteile, nämlich $CO_2$-Gas und Frischwasser zugeführt werden. Zur Zuführung von $CO_2$-Gas an diesen Vorratsbehälter ist dieser über eine Druckminder-Ventilanordnung mit einer $CO_2$-Vorratsflasche verbunden. Zum Aufund Nachfüllen des Vorratsbehälters mit Frischwasser ist dieser Vorratsbehälter an eine Wasserversorgungsleitung angeschlossen. Eine Zulauf-Steuereinrichtung steuert die jeweils benötigte Zulaufsmenge in Abhängigkeit des Wasserstands im Vorratsbehälter. Dieser Wasserstand wird durch Sensoren erfaßt, welche des einfachen Aufbaus wegen und der einfachen Signalverarbeitung durch eine nachgeschaltete Auswerteschaltung wegen bevorzugt als Meßelektroden ausgebildet sind. Bei genügendem Wasserdruck in der Versorgungsleitung wird die Zulauf-Steuereinrichtung lediglich durch eine elektrisch ansteuerbare Ventilanordnung realisierbar sein. Kann dagegen nicht gesichert davon ausgegangen werden, daß genügend Wasserdruck in der Versorgungsleitung andauernd zur Verfügung steht, so ist es erforderlich, eine Pumpenanordnung als Zulauf-Steuereinrichtung gegebenenfalls in Verbindung mit einer entsprechenden Ventilanordnung vorzusehen. Der Wasserversorgungsdruck muß ausreichend hoch sein, da die Wasserversorgung zumindest beim Nachfüllen des Vorratsbehälters gegen den $CO_2$-Gasdruck erfolgen muß.

Es ist überlegenswert, für welche Betriebsart die Zulauf-Steuereinrichtung sei es die elektrisch ansteuerbare Ventilanordnung oder die Pumpenanordnung, ausgelegt sein soll. Die Art der Betriebsweise geht sowohl auf die Herstellungskosten als auch auf die Funktionsweise und die Baugröße dieser Einrichtung ein. Im Normalbetrieb sollen beispielsweise bei Getränkeautomaten, die Zulauf-Steuereinrichtungen lediglich phasenweise arbeiten, wobei durchschnittlich die Ruhestandsphasen die Arbeitsphasen zeitlich überwiegen. Es können aber auch Störungen auftreten, welche die Arbeitsphasen unterschiedlich verlängern, so daß die Zulauf-Steuereinrichtungen eher dauerbetriebsmäßig angesteuert werden. Die Zulauf-Steuereinrichtung müßte also zur Sicherheit gegen derartige Einflüsse für eine Dauerbetriebsweise ausgelegt sein. Für die Mehrzahl der Flüssigkeits-Pumpeinrichtungen ist der sogenannte "Trockenlauf" besonders gefährlich, da dadurch weder die Lagerstellen geschmiert noch die Pumpanordnung gekühlt wird, so daß es zu Überhitzungen und zu Lagerschäden im Pumpsystem kommt. Ein derartiger Trockenlauf der Pumpeinrichtung ist jedoch zu befürchten, wenn aus dem Vorratsbehälter ein Wasserbedarfssignal vorliegt, während — verursacht durch verschiedenartige Umstände — kein nachfließendes Wasser zur Verfügung steht.

Bei einem bekannten Getränkeautomaten (DE-OS 30 38 045) wird ein Wasservorratsbehälter entweder direkt aus der Hauswasserleitung versorgt oder vom Benutzer aufgefüllt und ist mit einem Zwischenbehälter verbunden, aus dem die Entnahme des Wassers zum Karbonisierbehälter mittels einer Pumpe erfolgt. Im Zwischenbehälter und im Karbonisierbehälter sind Sensoren angeordnet, wobei der Sensor im Karbonisierbehälter die Pumpe an- und abschaltet, wenn der Wasserstand im Karbonisierbehälter zu niedrig bzw. ausreichend ist und der Sensor im Zwischenbehälter die Pumpe jedenfalls abschaltet, wenn im Zwischenbehälter der Wasserstand zu niedrig ist. Ein Trockenlauf der Pumpe kann dann auftreten, wenn in der Pumpe Luft- bzw. Gasblasen vorhanden sind und im Karbonisierbehälter durch dessen Sensor ein Wasserbedarf angezeigt wird.

Bei einem weiteren bekannten Getränkeautomat (EP-A 00 80 253) wird ein Karbonisierbehälter mittels einer Pumpe aus einem Wasservorratsbehälter versorgt. In dem Karbonisierbehälter sind zwei Sensoren angeordnet, wobei ein Sensor bei niedrigem Wasserstand über ein Steuergerät die Pumpe einschaltet und ein anderer Sensor bei dem Maximalwasserstand über das Steuergerät die Wasserpumpe abschaltet. Im Vorratsbehälter ist ein Sensor vorgesehen, der über das Steuergerät die Wasserpumpe abschaltet und eine Signallampe anschaltet, wenn der Wasserstand im Vorratsbehälter zu niedrig ist. Auch bei dieser Anordnung wird ein Trockenlauf der Pumpe aufgrund von Luft- bzw. Gasblasen in der Pumpe nicht verhindert.

Es ist nun Aufgabe der vorliegenden Erfindung, eine Schaltungsanordnung bereitzustellen, welche es gestattet, die Zulauf-Steuereinrichtung für üblichen, im wesentlichen störungsfreien Betrieb auszugestalten, wobei aber die Zulauf-Steuereinrichtung gegen unzulässige Überbelastungen bei auftretenden Störungen gegen erhöhten Verschleiß und Zerstörung geschützt wird. Für einen Vorratsbehälter mit ca. 2 Liter Wasser Fassungsvermögen in einem Getränkeautomaten, liegen normale Betriebsbedingungen insoweit vor, daß eine Neufüllung des Vorratsbehälters ca. innerhalb von 90 bis 150 Minuten und eine Nachfüllung des Vorratsbehälters bei Entnahme von Portionen karbonisierten Wassers zur Getränkebereitung innerhalb von 30 bis 45 Sekunden durchführbar ist.

Eine Schaltungsanordnung zum geregelten Auffüllen und Nachfüllen von Behältern mit Flüssigkeit, welche den geschilderten Anforderungen genügt, ist erfindungsgemäß dadurch gekennzeichnet, daß die den Wasserstand innerhalb des Wasseraufbereitungsbehälters einen Wasserstands-Sensor erfassende Auswerteschaltung zwischen Wasserstands-Sensoranordnung und der Zulauf-Steuereinrichtung eine Torschaltung in UND-Verknüpfungsfunktion enthält, daß dieser Auswerteschaltung eine bei Vorliegen eines Wasserbedarfssignals ein Durchschaltesignal für lediglich je Zulaufphase eine vorgegebene begrenzte Zeitspanne an die Vorschaltung abgebende Zeitablauf-Steuerschaltung zugeordnet ist und daß ein Geräteschalter zur Rücksetzung der Zeitablauf-Steuerschaltung angeordnet ist.

Bei Anwendung dieser erfindungsgemäßen Schaltungsanordnung können die angewendeten Zulaufsteuereinrichtungen für einen impulsartigen Betrieb ausgelegt sein. Da die zugeführten Ansteuerleistungen und Betriebsleistungen relativ kurzzeitig sind, wirkt sich eine in diesen Phasen thermisch überlastende Betriebsweise auf diese Funktionsteile nicht nachteilig aus. Die Zulaufsteuereinrichtungen können also mit hohen Leistungen und unter Bedingungen betrieben werden, welche bei einem Dauerbetrieb zur Zerstörung, zumindest aber zum erhöhten Verschleiß dieser Funktionsteile führen würden. Dieser Dauerbetrieb wird jedoch durch die erfindungsgemäß angewandte Maßnahme ausgeschlossen. Dazu ist die Zeitablauf-Steuerschaltung in die Auswerteschaltung für die Wasserstand-Sensoranordnung eingeschaltet. Bei Vorliegen eines Wasserbedarfssignals wird diese Zeitablauf-Steuerschaltung gestartet und sorgt lediglich für eine vorgegebene Zeitspanne dafür, daß in Abhängigkeit von diesem Wasserbedarfssignal die Zulaufsteuereinrichtung angesteuert wird. Ist der Wasserbedarf innerhalb dieser Zeitspanne befriedigt, so wird die Zulaufsteuereinrichtung abgeschaltet und die Zeitablauf-Steuerschaltung in ihre Ausgangslage zurückgesetzt. Dauert jedoch das Wasserbedarfssignal über die vorgegebene begrenzte Zeitspanne an, so schließt die Zeitablauf-Steuerschaltung die Torschaltung, so daß die Zulaufsteuereinrichtung zwangsweise trotz des Vorliegens des Wasserbedarfssignals abgeschaltet wird. Es ist für diesen Fall anzunehmen, daß eine Störung vorliegt, die durch eine Bedienungsperson zu beheben ist. Diese ist dann in der Lage, über den Geräteschalter eine Rücksetzung der Zeitablauf-Steuerschaltung und damit die Durchführung eines weiteren Betriebszyklusses zu bewirken.

Nach einer bevorzugten Ausgestaltung ist die Zeitablauf-Steuerschaltung durch den Geräteschalter für eine erhöhte Zeitspanne rücksetzbar. Die normalen Betriebszeitspannen, die in der Zeitablauf-Steuerschaltung berücksichtigt sind, dienen dem jeweiligen Nachfüllen des Vorratsbehälters bei portionsweiser Entnahme des Behälterinhalts und dauern beispielsweise 30 bis 45 Sekunden. Nach einem Störungsfall wird aber eine erhöhte Betriebszeit durch die Zeitablauf-Steuerschaltung ermöglicht, die beispielsweise so bemessen ist, wie die erforderliche Zeit für die Erstfüllung des Behälters; dafür können zwischen 90 Sekunden und 150 Sekunden vorgesehen sein.

Nach einer bevorzugten Ausgestaltung der erfindungsgemäßen Schaltungsanordnung ist es zweckmäßig, eine Signaleinrichtung der Zeitablauf-Steuerschaltung nachzuschalten, welche durch akustische und/oder optische Dauer- oder intermittierende Signale auf die Störung aufmerksam macht.

Eine derartige Störung kann dann vorliegen, wenn beispielsweise der Wasserzulauf nicht möglich ist, da der Zulauf-Wasserhahn (noch) geschlossen ist oder wenn im Pumpensystem Luft- bzw. Gasblasen ein ordnungsgemäßes Funktionieren der Fördereinrichtung verhindern.

Ein nach den Merkmalen der Erfindung ausgestaltetes Ausführungsbeispiel ist anhand der Zeichnung im folgenden näher beschrieben. Es zeigen:

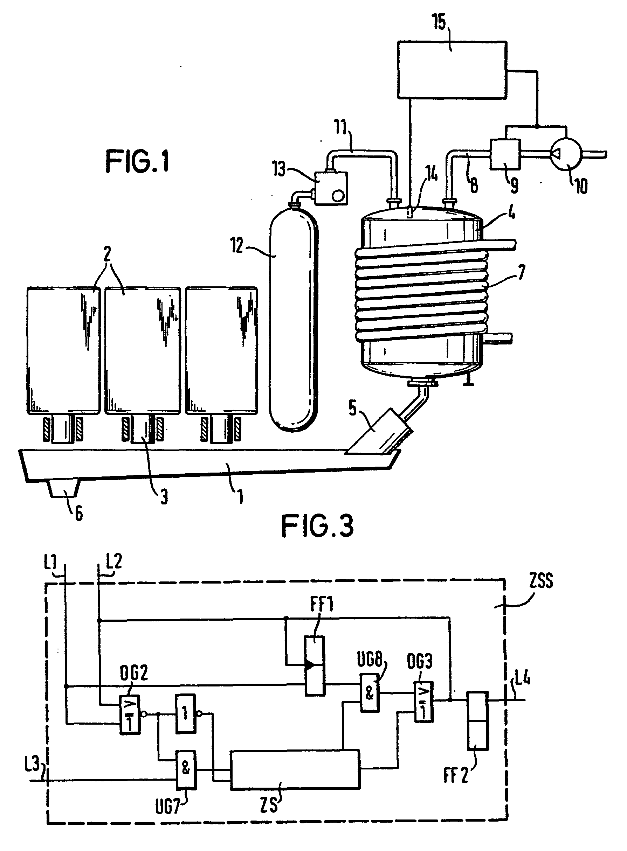

Fig. 1 einen prinzipiellen Aufbau einer Getränke-Mischeinrichtung,

Fig. 2 eine Schaltungsanordnung für diese Einrichtung und

Fig. 3 eine Schaltungsanordnung einer Zeitablauf-Steuerschaltung

Ein Getränkeautomat zum Mischen von unterschiedlichen Getränkekonzentraten mit gekühltem $CO_2$-Wasser zu einem Mischgetränk enthält als wesentliche Bestandteile eine Mischrinne 1, in welcher der Mischvorgang eingeleitet bzw. durchgeführt wird, Getränkekonzentrats-Behälter 2, aus denen über Dosiereinrichtungen 3 die Getränkekonzentrate portionsweise der Mischrinne 1 zugeführt werden, und einen Vorratsbehälter 4 für gekühltes $CO_2$-Wasser, welches über ein Ausgabeventil 5 in die Mischrinne bedarfsweise einfließen kann. Die Getränkemischung verläßt die Mischrinne 1 über einen Auslauftrichter 6.

Der $CO_2$-Wasservorrat wird gekühlt durch Kältemittel, welche über eine um den Vorratsbehälter 4 gewickelte Rohrleitung 7 geleitet sind. Ergänzt wird der $CO_2$-Wasservorrat innerhalb des Behälters 4 um die über das Ausgabeventil 5 entnommenen Mengen dadurch, daß über eine Rohrleitung 8 — gesteuert über ein Ventilsystem 9 und unterstützt durch ein Pumpensystem 10 — Frischwasser und über eine Rohrleitung 11 aus einem Behälter 12 mit $CO_2$-Gasfüllung — gesteuert durch ein Ventilsystem 13 — $CO_2$-Gas zugeleitet wird.

Durch dieses $CO_2$-Gas steht der Innenraum des Vorratsbehälters 4 unter einem gegenüber der Atmosphäre erhöhten Druck. Gegen diesen erhöhten Druck muß eine Ergänzung der Wassermenge im Vorratsbehälter 4 bis zu einem zu erfassenden Wasserstand erfolgen, und zwar insbesondere dann, wenn über das Ausgabeventil 5 $CO_2$-Wasser entnommen wird bzw. entnommen wurde. Um den Zuführdruck für das Wasser sicherzustellen, ist neben dem Ventilsystem 9 in der Rohrleitung 8 das Pumpensystem 10 angeordnet.

Der Wasserstand wird über einen als Elektrode ausgebildeten Sensor 14 erfaßt. Durch den Überdeckungsgrad dieses Sensors 14 mit kabonisiertem Wasser entsteht in Verbindung mit der metallischen Gehäusewandung des Vorratsgefäßes 4 eine veränderliche Widerstandsstrecke.

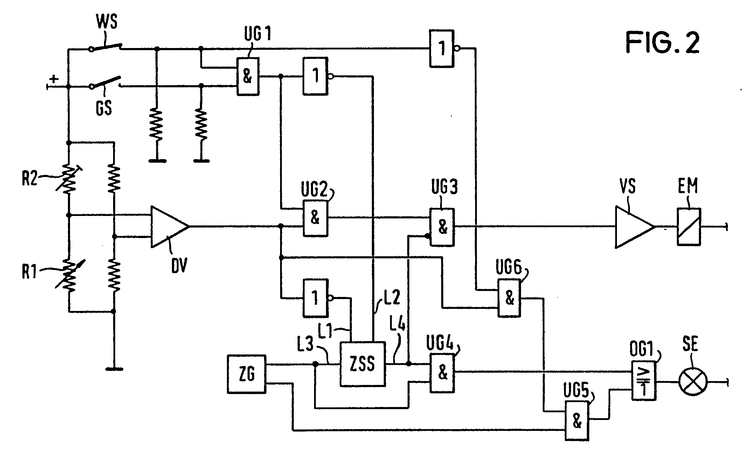

Diese veränderliche Widerstandsstrecke ist in der Schaltungsanordnung nach Fig. 2 als widerstandsveränderlicher Widerstand R1 symbolisiert. Der den jeweiligen Wasserstand des karbonisierten Wassers im Vorratsbehälter 4 repräsentierende veränderliche Widerstandswert wird durch eine Auswerteschaltung 15, welche in Fig. 2 näher dargestellt ist, erfaßt und zu Ansteuerzwecken für das Ventilsystem 9 und das Pumpensystem 10 verarbeitet. Im einzelnen sind die wesentlichen Funktionsteile der Auswerteschaltung 15 in Fig. 2 dargestellt.

Mit einem zum Zwecke der Justagen einstellbaren Widerstand R2 bildet der die Meßstrecke symbolisierende Widerstand R1 einen Spannungsteiler, dessen Mittenabgriff am Eingang eines Differenzverstärkers DV anliegt. Der Vergleichswert für den Differenzverstärker DV wird von einer weiteren Spannungsteilerstrecke, bestehend aus zwei Widerständen, geliefert. Wird ein Signal, welches einem Wasserbedarfssignal entspricht, über den Differenzverstärker DV abgegeben, so wird bei geschlossenem Geräteeinschalter GS und bei ebenfalls geschlossenem Wasserzulaufschalter WS, die über ein Und-Verknüpfungsglied UG1 miteinander verknüpft sind, über weitere Und-Verknüpfungsglieder UG2 und UG3 sowie über eine Verstärkerschaltung VS ein Elektromagnet EM angesteuert, über welches das Ventilsystem 9 geöffnet und das Pumpsystem 10 in Betrieb gesetzt wird. Gleichzeitig beginnt eine von einem Zeittaktgenerator ZG beeinflußte Zeitablauf-Steuerschaltung ZSS abzulaufen. Nach Ablauf einer durch diese Zeitablauf-Steuerschaltung ZSS eingestellte vorgegebene Zeitspanne wird das Und-Verknüpfungsglied UG3 gesperrt und der weitere Betrieb des Ventilsystems 9 und des Pumpensystems 10 somit unterbrochen. Eine Rücksetzung der Zeitablauf-Steuerschaltung ZSS und damit eine Freigabe des Und-Verknüpfungsgliedes UG3 ist nur dadurch möglich, daß der Geräteschalter GS geöffnet und wieder geschlossen wird. Gemäß den in der vorliegenden Schaltung getroffenen Maßnahmen wird bei einem derartigen Störungsfall eine Signaleinrichtung SE über ein Und-Verknüpfungsglied UG4 mit vom Zeittaktgenerator ZG erzeugten, mit intermittierenden Signalimpulsen über ein Oder-Verknüpfungsglied OG1 beaufschlagt.

Ist das vom Differenzverstärker DV abgegebenen Wasserbedarfssignal jedoch kürzer als die durch die Zeitablauf-Steuerschaltung ZSS vorgebene Zeitspanne, so wird diese sofort wieder in die Ausgangs-Zähllage zurückgesetzt, aus der bei Vorliegen eines neuen Wasserbedarfssignals die Zeitspannenbemessung neu beginnt. Die dadurch zur Verfügung gestellte Zeitspanne kann dabei bei 45 Sekunden liegen. Dieser Zeitraum ist ausreichend, um die bei einer Getränkebereitung benötigte Menge von karbonisiertem Wasser wieder durch zugeleitetes Frischwasser aufzufüllen. Der Rücksetzimpuls, welcher bei Betätigung des Geräteschalter GS an die Zeitablauf-Steuerschaltung ZSS geliefert wird, bewirkt dagegen eine Einstellung der Zeitablauf-Steuerschaltung ZSS für eine Zeitspanne von beispielsweise 150 Sekunden. Diese Zeitspanne reicht aus, um einen völlig geleerten Vorratsbehälter 4 aufzufüllen.

Vorliegende Schaltungsanordnung beinhaltet weitere Schaltungsmaßnahmen mit Verknüpfungsgliedern, welche die Öffnung des Wasserzulaufs über den Wasserzulaufschalter WS erfassen. Ein nicht geöffneter Wasserhahn stellt eine Sonderform einer Funktionsstörung dar, die an sich leicht zu beheben ist. Aus diesem Grunde ist es zweckmäßig, diese Störungsform ebenfalls zu signalisieren, und zwar wie durch das Ausführungsbeispiel realisierbar, durch eine intermittierende Signalgabe, die von der Signalgabe für die übrigen Störungen abweicht. Dazu wird ein zweites Taktsignal aus dem Zeittaktgenerator ZG über ein Und-Verknüpfungsglied UG5 bei entsprechendem Signalpotential vom Und-Verknüpfungsglied UG6 durchgeschaltet und über das Oder-Verknüpfungsglied OG1 zur Signaleinrichtung SE geleitet.

Die Figur 3 zeigt eine Ralisierungsmöglichkeit für die Zeitablauf-Steuereinrichtung ZSS gemäß Figur 2. Die durch den Zeittaktgenerator ZG erzeugten Impulse liegen über die Leitung L3 am Und-Verknüpfungsglied UG7 an und werden durch dieses an den Zähltakteingang einer Zählschaltung ZS geleitet, wenn sowohl die Schalter GS und WS geschlossen sind und vom Differenzverstärker DV ein Wasserbedarfssignal abgegeben wird. In diesem Fall liegt auf den Eingangsleitungen L1 und L2 je ein Potential einer "log 0" infolge der vorgeschalteten Inverterelemente. Ist der Wasserfüllvorgang abgeschlossen so liegt auf der Leitung L1 ein "log 1"-Potential. Über dem Ausgang des NOR-Verknüpfungsgliedes OG2 wird das Und-Verknüpfungsglied UG 7 gesperrt und gleichzeitig die Zählschaltung ZS über den Rücksetzeingang zurückgesetzt. Die Zählschaltung ZS hat einen Zählzyklus, welcher der Zeitspanne entspricht, die bei Inbetriebnahme bzw. Wiederinbetriebnahme des Geräts maximal zur Verfügung gestellt wird. Ist diese Zeitspanne innerhalb eines Zählvorganges abgelaufen, so tritt am Übernahmeausgang (Carry-Output) der Zählschaltung ZS ein Signal auf, das über das Oder-Verknüpfungsglied OG4 die Taktimpulse zur Signaleinrichtung SE durchschaltet. Eine Störung wird signalisiert und gleichzeitig wird das Und-Verknüpfungsglied UG3 gesperrt.

Das System kann nunmehr wieder erst in Betrieb genommen werden, wenn der Geräteschalter GS geöffnet und wieder geschlossen wird. Das bei geöffneter Stellung des Geräteschalters GS auf der Leitung L2 liegende "log 1"-Potential bewirkt eine Rücksetzung sowohl der Zählschaltung ZS als auch der bistabilen Kippstufe FF2 über deren Rücksetzeingänge.

Beim Einschalten des Geräteschalters GS wird über den invertierenden Takteingang einer bistabilen Kippstufe FF1 dieses gesetzt, so daß über dessen invertierenden Ausgang ein Und-Verknüpfungsglied UG8 gesperrt wird. Ist nach dem Schließen des Gerätschalters GS der erste Nachfüllvorgang abgeschlossen, so setzt das nunmehr auf der Leitung liegende "log 1"-Potential die bistabile Kippstufe FF1 über dessen Rücksetzeingang zurück und über deren invertierenden Eingang wird das Und-Verknüpfungsglied UG8 für einen Zählerausgang der Zählschaltung ZS durchgesteuert. Dieser Zählerausgang der Zählschaltung ZS ist einer verkürzten Zeitspanne zugeordnet. Das Verhältnis zur Gesamtzeit kann bei dem im Beispiel verwendeten Binärzähler 1:2 und 1:4 einfach gewählt und abgegriffen werden. Nichtbinäre Verhältnisse erfordern eine der Zählschaltung ZS nachgeschaltete Dekoderschaltung. Die Durchschaltung des Und-Verknüpfungsglieds UG8 bewirkt, daß die für die Nachfüllung des Wasservorrats nach der ersten Füllphase vorgesehene Zeitspanne entsprechend verkürzt ist. Bei Überschreitung dieser Zeitspanne wird über dieses Und-Verknüpfungsglied UG8 und das Oder-Verknüpfungsglied OG3 die bistabile Kippstufe gesetzt, so daß der Wasserzulauf abgebrochen und Alarm gegeben werden.

Durch die im Ausführungsbeispiel getroffenen schaltungstechnischen Maßnahmen wird somit eine Überbeanspruchung und Fehlbeanspruchung des Ventilsystems 9, insbesondere aber des Pumpensystems 10, derart zeitlich begrenzt, daß keine Gefahr für die Funktionsteile besteht. Die dargestellten Schaltungsmaßnahmen können zweckmäßigerweise aber auch durch Funktionseinheiten einer Mikroprozessor-Steuerung realisiert sein.

Im dargestellten und beschriebenen Ausführungsbeispiel sind die schaltungstechnischen Maßnahmen durch Funktionsbaugruppen, insbesondere in Form von logischen Verknüpfungsgliedern und Zeitgliedern realisiert. Bevorzugt in Verbindung mit weiteren steuertechnischen Maßnahmen ist es jedoch zweckmäßig, bei Verfolgung der erfindungsgemäßen Lösung eine Mikroprozessor-Schaltung einzusetzen, welche die dargelegten Funktionsbaugruppen äquivalent einschließt.

## Patentansprüche

1. Schaltungsanordnung zum geregelten Auffüllen und Nachfüllen von Behältern mit Flüssigkeiten unter Verwendung einer elektrisch beeinflußbaren Zulaufsteuereinrichtung (8, 9, 10) zur phasenweisen Durchführung des Flüssigkeitszulaufs; insbesondere für Getränke-Mischgeräte, mit einem Wasseraufbeitungsbehälter (4), welchem das aufzubereitende Wasser über eine Förderpumpe (10) in Abhängigkeit eines von zwei über eine Wasserstands-Sensoranordnung (14) aus dem Wasserstand ermittelten Wasserbedarfssignalen zuführbar ist, dadurch gekennzeichnet, daß die den Wasserstand innerhalb des Wasseraufbereitungsbehälters (4) über einen Wasserstandssensor (14) erfassende Auswerteschaltung (15) zwischen Wasserstands-Sensoranordnung (14, R1) und der Zulaufsteuereinrichtung (9, 10) eine Torschaltung in Und-Verknüpfungsfunktion (UG3) enthält, daß dieser Auswerteschaltung eine bei Vorliegen eines Wasserbedarfssignals ein Durchschaltesignal für lediglich je Zulaufphase eine vorgegebene begrenzte Zeitspanne an die Torschaltung (Und-Verknüpfungsglied U3) abgebende Zeitablauf-Steuerschaltung (ZSS) zugeordnet ist und daß ein Geräteschalter (GS) zur Rücksetzung der Zeitablauf-Steuerschaltung (ZSS) angeordnet ist.

2. Schaltungsanordnung nach Anspruch 1, dadurch gekennzeichnet, daß die Zeitablauf-Steuerschaltung (ZSS) durch den Geräteschalter (GS) für eine erhöhte Zeitspanne rücksetzbar ist.

3. Schaltungsanordnung nach einem der Ansprüche 1 oder 2, dadurch gekennzeichnet, daß eine Signaleinrichtung (SE) der Zeitablauf-Steuerschaltung (ZSS) nachgeschaltet ist.

4. Schaltungsanordnung nach Anspruch 3, dadurch gekennzeichnet, daß eine optische Signaleinrichtung (SE) angeordnet ist.

5. Schaltungsanordnung nach einem der Ansprüche 3 oder 4, dadurch gekennzeichnet, daß eine Signaleinrichtung (SE) mit intermittierender Signalgabe angeordnet ist.

6. Schaltungsanordnung nach einem der Ansprüche 1 bis 5, dadurch gekennzeichnet, daß der Geräteschalter (GS) über die Geräte-Hauptschalter-Beeinflussung betätigbar ist.

7. Schaltungsanordnung nach Anspruch 6, dadurch gekennzeichnet, daß der Geräteschalter (GS) mit einem Wasserzulaufschalter (WS) logisch verknüpft ist.

8. Schaltungsanordnung nach einem der Ansprüche 1 bis 7, dadurch gekennzeichnet, daß die schaltungstechnischen Maßnahmen, insbesondere die logischen Verknüpfungsglieder und die Zeitablauf-Steuereinrichtung innerhalb einer Mikroprozessor-Schaltung integriert realisiert sind.

## Revendications

1. Circuit pour le remplissage régulé de réservoirs avec des liquides, en utilisant un dispositif de commande d'amenée (8, 9, 10), pouvant être influencé par voie électrique, pour la mise en oeuvre par phases de l'amenée de liquide, notamment pour des appareils de mélange pour boissons, comprenant un réservoir (4) de traitement d'eau auquel l'eau à traiter peut être amenée par l'intermédiaire d'une pompe à refoulement (10) en fonction d'un signal parmi deux signaux de besoin d'eau déterminés à partir du niveau d'eau par un agencement de capteur (14) de niveau d'eau, caractérisé par le fait que le circuit d'exploitation (15), détectant le niveau d'eau à l'intérieur du réservoir (4) de traitement d'eau par l'intermédiaire d'un capteur (14) de niveau d'eau et se trouvant entre l'agencement de capteur (14, R1) de niveau d'eau et le dispositif de commande d'amenée (9, 10), contient un circuit de porte à fonction logique ET (UG3), qu'à ce circuit d'exploitation est associé un circuit de commande d'écoulement de temps (ZSS) émettant, en présence d'un signal de besoin d'eau, un signal de fermeture de contact pour seulement un laps de temps limité prédéterminé par phase d'amenée au circuit de porte (élément logique ET U3), et qu'un interrupteur d'appareil (GS) est prévu pour le repositionnement du circuit de commande d'écoulement de temps (ZSS).

2. Circuit selon la revendication 1, caractérisé par le fait que le circuit de commande d'écoulement de temps (ZSS) peut être repositionné par l'interrupteur d'appareil (GS) pour un laps de temps prolongé.

3. Circuit selon la revendication 1 ou 2, caractérisé par le fait qu'un dispositif de signalisation (SE) est monté en série avec le circuit de commande d'écoulement de temps (ZSS).

4. Circuit selon la revendication 3, caractérisé par le fait qu'un dispositif de signalisation optique (SE) est prévu.

5. Circuit selon la revendication 3 ou 4, caractérisé par le fait qu'un dispositif de signalisation (SE) avec émission de signaux intermittente est prévu.

6. Circuit selon l'une des revendications 1 à 5, caractérisé par le fait que l'interrupteur d'appareil (GS) peut être actionné par l'intermédiaire de l'interrupteur principal de l'appareil.

7. Circuit selon la revendication 6, caractérisé par le fait que l'interrupteur d'appareil (GS) est combiné de manière logique à un interrupteur d'amenée d'eau (WS).

8. Circuit selon l'une des revendications 1 à 7, caractérisé par le fait que les dispositions de circuit, notamment les éléments de combinaison logiques et le dispositif de commande d'écoulement de temps, sont réalisées par intégration dans un circuit à microprocesseur.

**Claims**

1. Circuit arrangement for the regulated filling-up and replenishment of containers by liquids with the use of an electrically influenceable feed control equipment (8, 9, 10) for the phased performance of the liquid feed, in particular for beverage-mixing devices, with a water preparation container (4), to which the water to be prepared is feedable by way of a conveying pump (10) in dependence on one of two water requirement signals determined from the water level by way of a water level sensor arrangement (14), characterised thereby, that the evaluating circuit (15), which detects the water level within the water preparation container (4) by way of a water level sensor (14), contains a gate circuit in AND interlinking logic function (UG3) between the water level sensor arrangement (14, R1) and the feed control equipment (9, 10), that this evaluating circuit is associated with a time run-down control circuit (ZSS), which in the presence of a water requirement signal delivers a switch-through signal for a preset limited time span merely for each feed phase to the gate circuit (AND interlinking logic member U3) and that an appliance switch (GS) is arranged for the resetting of the time rundown control circuit (ZSS).

2. Circuit arrangement according to claim 1, characterised thereby, that the time run-down control circuit (ZSS) is resettable by the appliance switch (GS) for an increased time span.

3. Circuit arrangement according to one of the claims 1 and 2, characterised thereby, that a signal equipment (SE) is connected behind the time run-down control circuit (ZSS).

4. Circuit arrangement according to claim 3, characterised thereby, that an optical signal equipment (SE) is arranged.

5. Circuit arrangement according to one of the claims 3 and 4, characterised thereby, that a signal equipment (SE) with intermittent signal delivery is arranged.

6. Circuit arrangement according to one of the claims 1 to 5, characterised thereby, that the appliance switch (GS) is actuable by way of the influencing of the main appliance switch.

7. Circuit arrangement according to claim 6, characterised thereby, that the appliance switch (GS) is logically interlinked with a water feed switch (WS).

8. Circuit arrangement according to one of the claims 1 to 7, characterised thereby, that the circuit-technical measures, in particular the logical interlinking members and the time run-down control equipment, are realised integrated within a microprocessor control circuit.

## FIG.1

## FIG.3

EP 0 173 823 B1

FIG.2